# EUROPEAN PATENT APPLICATION

(11) **EP 2 193 957 A2**
(43) Date of publication of application: **09.06.2010**
(21) Application number: 09014639.0
(22) Date of filing: 24.11.2009
(51) Int. Cl.: B60R 1/00

(54) **Bird's-eye image generating apparatus**

(30) Priority: 28.11.2008 JP 2008304745
(71) Applicant: Aisin Seiki Kabushiki Kaisha, Aichi-ken 448-8650 (JP)
(72) Inventor: Kakinami, Toshiaki, Kariya-shi, Aichi-ken 448-8650 (JP)
(74) Representative: Kramer - Barske - Schmidtchen

(57) **Abstract**

A bird's-eye image generating apparatus includes a first image receiving portion (1) for receiving a first image (IA), a second image receiving portion (2) for receiving a second image (IB) at a second position, a first projective transforming portion (3) for executing a projective transformation to the first image (IA) so as to be a first transformed image (A) and for correcting the first transformed image so as to be a first corrected image (A') at the second position, a second projective transforming portion (4) for executing the projective transformation to the second image (IB) so as to be in a second transformed image (B), a three-dimensional object range extracting portion (6) for extracting a three-dimensional object range (R) in which a three-dimensional object (40) exists, and a projective distortion correcting portion (7) for correcting the three-dimensional object range (R) by compressing so as to be a second corrected image (B').

## Description

### TECHNICAL FIELD

This disclosure relates to a bird's-eye image generating apparatus for generating a bird's-eye image seen from above in an approximately vertical direction on the basis of a captured image taken by a camera mounted to a vehicle in order to capture a vehicle periphery.

### BACKGROUND DISCUSSION

An image taken by a camera is transformed into an image seen from another viewpoint that is different from a viewpoint of the camera, by applying an image process to the captured image taken by the camera. This process is known as a viewpoint conversion process. Specifically, in the known viewpoint conversion process, the image captured by the camera mounted to a vehicle is transformed into a bird's-eye image seen from a viewpoint above the vehicle, and the transformed image is displayed on a display device provided in a vehicle compartment. Generally, In the viewpoint conversion process, even when all objects shown in the image are three-dimensional objects, the image is processed considering that those objects exist on a same plane. For example, for the purpose of a usage in the vehicle, even when each of the objects is a three-dimensional object, the viewpoint conversion process is executed as if the object is a mark existing on a road surface, in the same manner as an image of a road sign painted on a road surface is processed. The road sign pained on the road surface may be transformed into a bird's-eye image that is actually seen from the above of the vehicle without providing any unreasonable perception, however, when a captured image of a three-dimensional object, such as another vehicle or an obstacle is processed, the processed image may be distorted, which may provide a sufficient unreasonable perception.

In view of the unreasonable perception, a document JPH7-186833A discloses a technology of a viewpoint conversion by which a taken image is separated into a road range and a non-road range, and an image only corresponding to the road range is processed. After the viewpoint conversion is applied to the image corresponding to the road range, the image corresponding to the non-road range, to which the viewpoint conversion is not applied and provided as seen in an original viewpoint, is combined to the transformed image, and the combined image is displayed. An image that is far from the three-dimensional object (the non-road range), in other words the image exists behind the three-dimensional object, is not displayed because it is considered that there is no image corresponding to the road range behind the object. Further, a document JP2006-333009A discloses a method by which an object having a height is compressed in the height direction thereof, and the compressed image of the object is combined to an image to which the viewpoint conversion is applied. In this case, the object seen in the original viewpoint is compressed, and an image exists far from the camera relative to the object, in other words the image behind the object, is displayed as a painted dark shade.

In JPH7-186833A, the viewpoint conversion is not applied to the image corresponding to the non-road range (three-dimensional object), and the three-dimensional object is displayed as in the captured image by the camera. In JP2006-333009A, the viewpoint conversion is also not applied to the image corresponding to the non-road range (three-dimensional object), and although the three-dimensional object is compressed in its height direction, the captured image by the camera is displayed. Further, according to H7-186833A, the three-dimensional object may be easily recognized by a user, and according to JP2006-333009A, a visual effect of viewpoint conversion may slightly be provided to the user. However, in both of JPH7-186833 and JP2006-333009A, because the image that is generated after the viewpoint conversion includes the image to which the viewpoint conversion is not applied, the user may have an unreasonable perception when seeing the mixed image. Further, this unreasonable perception may lead to a misidentification of a position of an obstacle or the like, which exists in the vehicle periphery, by the user. Furthermore, because the bird's-eye image has a viewpoint above the vehicle, a range of the image captured as the bird's-eye image in the vehicle periphery may be narrower than an image captured in an approximately horizontal direction, which means that an actual distance between the obstacle in the bird's-eye image and the vehicle may relatively be shortened. The misidentification of the obstacle by the user is not preferable for safety reasons. Accordingly, a technology for providing the captured image, including the three-dimensional object, being processed by the viewpoint conversion in order to reduce the user's unreasonable perception and to easily recognize a distance between the three-dimensional object and the vehicle by the user, is needed.

A need thus exists to provide a bird's-eye image generating apparatus for generating a bird's-eye image by applying a viewpoint conversion to an image captured by a camera, mounted to a vehicle in order to capture a vehicle periphery, so as to be in a transformed image, including a three-dimensional object, seen from above in an approximately vertical direction, so that a user of the vehicle may easily recognize a distance between the three-dimensional object and the vehicle with reducing a unreasonable perception.

### SUMMARY

According to an aspect of this disclosure, a bird's-eye image generating apparatus includes a first image receiving portion for receiving a first captured image as a first image taken by a camera at a first position, the camera mounted to a vehicle in order to capture a vehicle periphery, a second image receiving portion for receiving a second captured image as a second image taken by the camera at a second position where the vehicle is moved from the first position by a moving amount, a first projective transforming portion for executing a projective transformation to the first image so as to be a first transformed image that is an image seen from above in a vertical direction and for correcting the first transformed image so as to be a first corrected image at the second position, a second projective transforming portion for executing the projective transformation to the second image so as to be in a second transformed image that is an image seen from above in the vertical direction, a three-dimensional object range extracting portion for extracting a three-dimensional object range in which a three-dimensional object exists, on the basis of a difference between the first corrected image and the second transformed image, so as to be in a trapezoidal shape in which two unparallel sides are positioned so as to be crossed at an optical center when seen from above in the vertical direction and a projective distortion correcting portion for correcting an image corresponding to the three-dimensional object range by compressing toward the optical center so as to be a second corrected image.

Thus, the bird's-eye image whose viewpoint is converted is generated by applying the projective transformation to the entire range of the captured image, and the three-dimensional object range in which the three-dimensional object exists is extracted from the generated bird's-eye image. Because the three-dimensional object range is extracted so as to be in a trapezoidal shape having two parallel side and two unparallel sides that are crossed at the optical center when seen from above in an approximately vertical direction, the three-dimensional object range may be extracted with high repeatability regardless of the shape of the three-dimensional object. Further, because the three-dimensional object is compressed within the three-dimensional object range toward the optical center, the distortion in the image may visually appropriately corrected on the basis of a simple process such as a proportional distribution or the like. The three-dimensional object is generated as an image seen from above in an approximately vertical direction, a level of an unreasonable perception to the entire bird's-eye image may be decreased. Accordingly, the image captured by the camera, mounted to the vehicle in order to capture the vehicle periphery, may be processed by the viewpoint conversion so as to be the bird's-eye image seen from above in an approximately vertical direction, and the bird's-eye image is displayed together with the three-dimensional object, without providing the unreasonable perception, in order to provided an easy-to-understand distance perspective between the three-dimensional object and the vehicle to the user.

According to an aspect of this disclosure, the bird's-eye image generating apparatus further includes a superimposing portion for masking a range in which a compressed image of the three-dimensional object does not exist in the three-dimensional object range with a color that is identical to a background color in the vicinity of the three-dimensional object range.

In a range corresponding to a range in which the compressed image of the three-dimensional object does not exist in the three-dimensional object range, the original image having distortions still exist. When the original image having distortions exist, the effect caused by decreasing the level of strangeness (e.g., unreasonable perception) of the three-dimensional object may be limited. Accordingly, the range where the three-dimensional object does not exist may be masked with a color that is identical to a background color in the vicinity of the three-dimensional object range. Because the range to be masked is located behind the three-dimensional object, the range is not included in the captured image I captured by the camera. Further, the three-dimensional object is located closer to the vehicle rather than the range (e.g., a blind area), masking the blind area may cause a serious problem.

According to an aspect of this disclosure, the bird's-eye image generating apparatus further includes a superimposing portion for masking a range in which a compressed image of the three-dimensional object does not exist in the three-dimensional object range by applying a half tone process with warm color.

In the range corresponding to the range in which the compressed image of the three-dimensional object does not exists in the three-dimensional object range, the original image having distortions still exist. However, when the range corresponding to the range in which the compressed image of the three-dimensional object does not exists in the three-dimensional object range, the original image having distortions still exist is masked by applying the half tone process with warm color, the unreasonable perception may be decreased. The range to be masked is the blind area that is hidden behind the three-dimensional object, and the range of the blind area that is hidden behind the three-dimensional object may be distinguished in order to draw an attention. The user may be calmly informed with the color that the range is the blind area in a negative manner. Generally the color of the road surface is a monotone color or a cold color, so that the range masked with the warm color may increase a visibility. Further, applying the half tone process to the range G, the user may know that the range is a blind area without largely distinguishing the difference between the range and the background.

According to an aspect of this disclosure, the bird's-eye image generating apparatus further includes a superimposing portion for superimposing a warning on a range in which a compressed image of the three-dimensional object does not exist in the three-dimensional object range in order to informing an existence of the three-dimensional object to a user.

In the range corresponding to the range in which the compressed image of the three-dimensional object does not exists in the three-dimensional object range, the original image having distortions still exist. Because the range including the image having the distortion is the blind area that is hidden behind the three-dimensional object, the range may not be included in the captured image captured by the camera, and it may not be forcedly displayed. Accordingly, the warning (notice) is superimposed on the range, which is a blind area, and that means the warning is not superimposed on a range that is considered as important information to the user. The warning being superimposed on a range other than the range may cover another object on the ground other than the three-dimensional object such as a road indication. According to the embodiment, because the warning is superimposed on the range, the user may recognize both of the bird's-eye image and the warning with high visibility.

According to an aspect of this disclosure, the first projective transforming portion corrects the first transformed image to the first corrected image at the second position on the basis of a detection at a moving amount detecting portion for detecting a moving amount of the vehicle.

In this configuration, because the first transformed image is precisely positionaly corrected relative to the second position at which the second image is captured, the three-dimensional object range is extracted with high accuracy.

According to an aspect of this disclosure, the first projective transforming portion corrects the first transformed image to a first corrected image at the second position where the vehicle is distant from the first position in a predetermined direction by a predetermined distance, and the second image receiving portion receives the captured image, taken at a position where the vehicle reaches the second position, as the second image, on the basis of a detection at a moving amount detecting portion for detecting a moving amount of the vehicle.

In this configuration, before the second image is captured, the first transformed image is positionaly corrected, and the differences between the second transformed image and the position corrected image may be quickly calculated.

Accordingly, the bird's-eye image may be generated with providing a small time-lag and displayed n the monitor. In this case, the first transformed image needs to be positionaly corrected on the basis of the assumption of the second position. The moving amount from the first position to the second position is a slight amount, which may be considered as a straight-line movement. Thus, the second position may be predicted with high accuracy in accordance with the vehicle speed and the steering angle (the operation amount of the steering wheel).

### BRIEF DESCRIPTION OF THE DRAWINGS

The foregoing and additional features and characteristics of this disclosure will become more apparent from the following detailed description considered with the reference to the accompanying drawings, wherein:

Fig. 1 illustrates an explanation diagram of a front portion of a vehicle;

Fig. 2 illustrates a block diagram indicating a basic configuration of the vehicle;

Fig. 3 illustrates an explanation diagram indicating an example of a viewpoint conversion;

Fig. 4 illustrates an example of an image captured by the camera having a viewpoint in an approximately horizontal direction;

Fig. 5 illustrates an example of a transformed image seen from above in an approximately vertical direction;

Fig. 6 illustrates an example of a captured image captured in an approximately horizontal direction;

Fig. 7 illustrates an example of a GPT image obtained by applying a viewpoint conversion to the captured image;

Fig. 8 is an explanation drawing for indicating a principle of an extraction of a three dimensional object.

Fig. 9 shows explanation diagrams indicating an example for extracting a range in which the three-dimensional object exists, from a GPT image obtained from the captured image;

Fig. 10 is an explanation diagram indicating another example of the extraction of the three-dimensional object range;

Fig. 11 is an explanation diagram indicating another example of the extraction of the three-dimensional object range;

Fig. 12 illustrates a block diagram schematically indicating a configuration of a bird's-eye image generating apparatus;

Fig. 13 illustrates an explanation diagram indicating a principle of a correction of a projective distortion;

Fig. 14 is an example of an image of a projective distortion corrected image in which the projective distortion is corrected;

Fig. 15 is an example of an image in which a masking process is applied to the projective distortion corrected image; and

Fig. 16 is an example of an image in which a warning is superimposed on the projective distortion corrected image.

### DETAILED DESCRIPTION

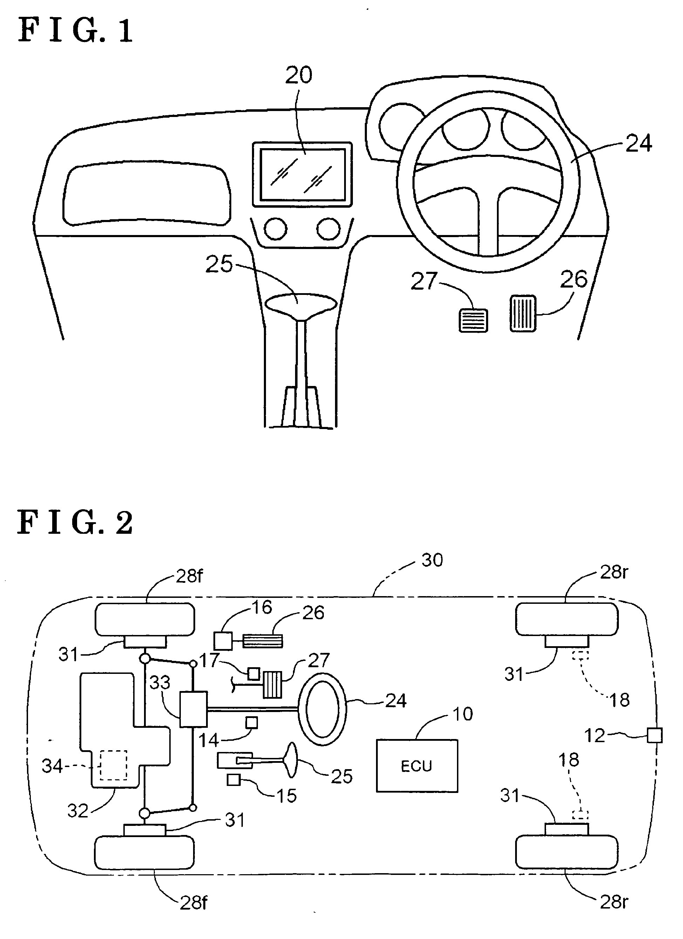

An embodiment of this disclosure will be explained in accordance with the attached drawings. A bird's-eye image generating apparatus of this disclosure is used for a parking assist device, a driving assist device and the like. Figs. 1 and 2 illustrates diagrams each indicating a basic structure of a vehicle 30 to which the bird's-eye image generating apparatus is mounted. A steering wheel 24 provided at a driving seat is operated in order to steer the vehicle 30, in conjunction with a power steering unit 33, by transmitting a rotational operating force to front wheels 28f. An engine 32 and a transmission mechanism 34 are provided at a front portion of the vehicle 30. The transmission mechanism 34 includes a torque converter and a continuously variable transmission (CVT) for changing a torque from the engine 32 and transmitting the torque to the front wheels 28f and/or rear wheels 28r. Specifically, the engine torque is transmitted to one of the front wheels 28f and the rear wheels 28r, or both of the front wheels 28f and the rear wheels 28r, determined on the basis of a driving type of the vehicle (a front wheel drive, a rear wheel drive or a four-wheel drive). Further, an acceleration pedal 26 and a brake pedal 27 are provided so as to be parallel to each other in the vicinity of the driving seat. The acceleration pedal 26, serving as an acceleration operating means, is operated by the user in order to control the speed of the vehicle 3. The brake pedal 27 is operated by the user in order to apply a braking force to the front wheels 28f and the rear wheels 28r by means of a braking apparatus 31.

A monitor 20 (e.g., a display device) is provided on an upper portion of a console provided in the vicinity of the driving seat. The monitor 20 includes a liquid crystal type monitor having a backlight. The monitor 20 also includes a touch panel, which is a static type or a pressure-sensitive type, by which a position where the user touches the monitor is inputted as a location data. The touch panel is used as an instruction inputting means by which a start of the parking assist is inputted. The monitor 20 also includes a speaker by which a voice guide, sound effects and the like are outputted. In a case where a navigation system is mounted to the vehicle 30, the monitor 20 may also be used as a display device of the navigation system. The monitor 20 may be a plasma display type, a CRT type or the like, and the speaker may be provided at another location such as an inner door panel.

An operation system of the steering wheel 24 includes a steering sensor 14 for measuring an operation amount of the steering wheel 24 and a steering operation direction. An operation system of a shift lever 25 includes a shift position sensor 15 for detecting a shift position of the shift lever 25. An operation system of the acceleration pedal 26 includes an acceleration sensor 16 for measuring an operation amount of the acceleration pedal 26, and an operation system of the brake pedal 27 includes a brake sensor 17 for detecting an operation of the brake pedal 27.

A rotation sensor 18 is provided as a moving distance sensor for measuring a rotation amount of at least one of the front wheels 28f and the rear wheels 28f. In the embodiment, the rotation sensor 18 is provided at each of the rear wheels 28r. The moving distance may be measured on the basis of the moving amount of the vehicle 30 calculated on the basis of a rotation amount of a drive train at the transmission mechanism 34. The vehicle 30 further includes an ECU (electronic control unit) 10 serving as a core member of the bird's-eye image generating apparatus.

A camera 12 is provided at the rear portion of the vehicle 30 in order to capture a rearview of the vehicle 30. The camera 12 includes a digital camera having an imaging element such as a CCD (charge coupled device) or a CIS (CMOS image sensor) and outputs image information captured by the imaging element, as a motion image in real-time. The camera 12 includes a wide-angle lens having a horizontal angle of 140 degrees. The camera 12 has a view in an approximately horizontal direction and is mounted to the vehicle 30 so as to capture the rearview of the vehicle 30. More specifically, the camera 12 is mounted to the vehicle 30 facing the rear thereof and is tilted downwardly by 30 degrees so as to capture a rear range of approximately 8m ahead from a rear end of the vehicle. The captured image is inputted to the ECU 10.

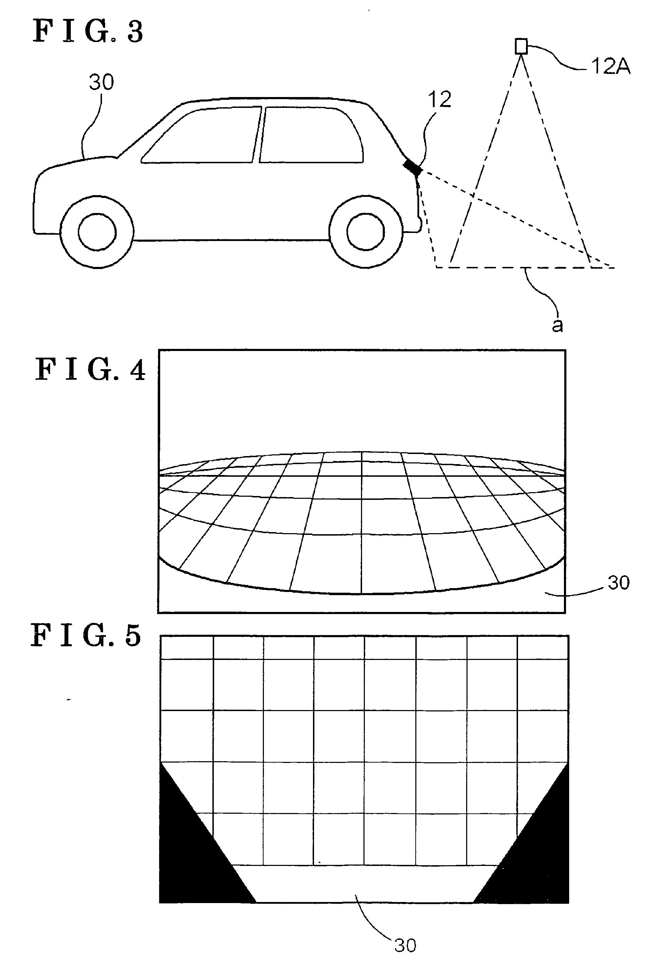

The bird's-eye image generating apparatus (ECU10) obtains an image captured by the camera 12 having the view in the approximately horizontal direction and transforms the obtained image into a hypothetical image that is supposed to be captured by a hypothetical camera 12A positioned above the captured area, in other words a hypothetical image that is seen from above in an approximately vertical direction. A drawing in Fig. 4 indicates an example of an image captured by the camera 12, and a drawing in Fig. 5 indicates an example of an image that is transformed from the image captured by the camera 12 so as to be a hypothetical image that is supposed to be captured by the hypothetical camera 12A described above. The transformed image is also referred to as a bird's-eye image. The bird's-eye image in Fig. 5 includes a blank area at each of a lower-left corner and a lower-right corner. The blank area does not include image data.

A principle for determining a three dimensional object used for generating a bird's-eye image will be explained. A ground plane transformation image (GPT image) that is one of a bird's-eye image is generated from one of two parallax images, and the generated GPT image is positionaly corrected on the basis of another GPT image assumed on the basis of a viewpoint of the other of two parallax images. Then, an GPT image is generated from the other of the two parallax images, and differences between the GPT image generated from the other of the two parallax images and the positionaly corrected GPT image generated from the one of the two parallax images are calculated, and an area that has the differences is extracted as a three dimensional object. The two parallax images may be captured by plural cameras and may also be captured by a single camera at different positions.

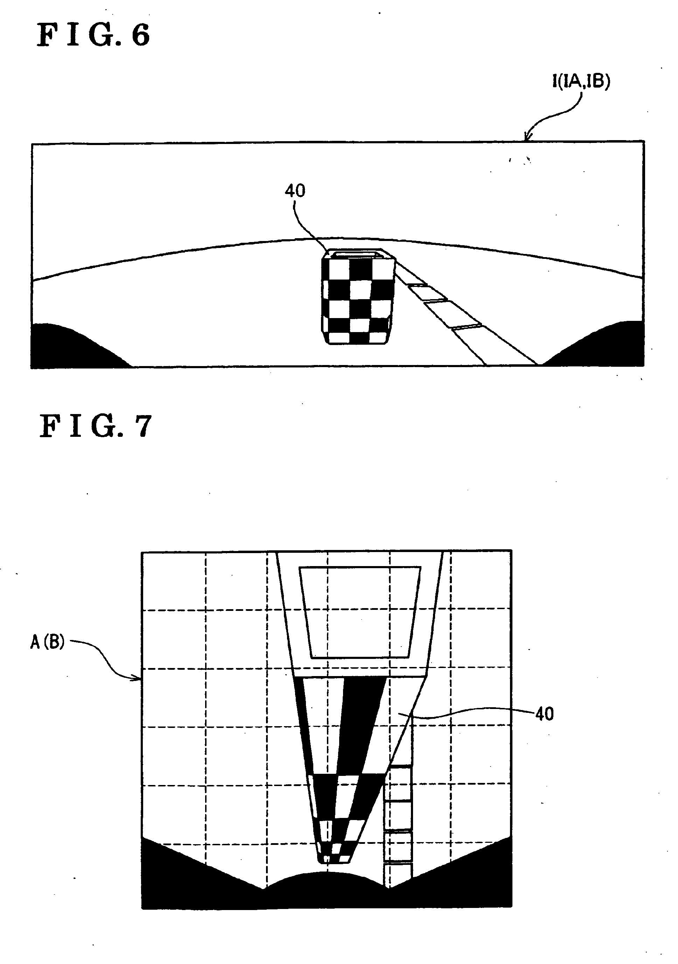

The following is an explanation of a case where a single camera is moved and used at different positions. Fig. 6 is an image of an example in which a captured image I (a first captured image IA, a second captured image IB) is taken by the camera 12 in an approximately horizontal direction. Fig. 7 is an image of an example in which a viewpoint conversion is applied to the captured image I (IA, IB) so as to be a GPT image A (or B). As illustrated in Fig. 6, on the periphery of the vehicle 30, a three-dimensional object 40 is placed. This three dimensional object 40 is an approximate rectangular solid. Because the three dimensional object 40 is considered as a mark painted on a road surface, the mark having a constant width in a depth direction of the captured image is shown in a manner where the width is gradually enhanced as a depth of the image is enhanced. Accordingly, the GPT image A generated by applying the viewpoint conversion to the captured image IA (I) shows the three-dimensional object as a mark whose width is enhanced as the image deepens as illustrated in Fig. 7. Specifically, the three dimensional object 40 is shown in the GPT image A in a trapezoidal shape as illustrated in Fig. 7.

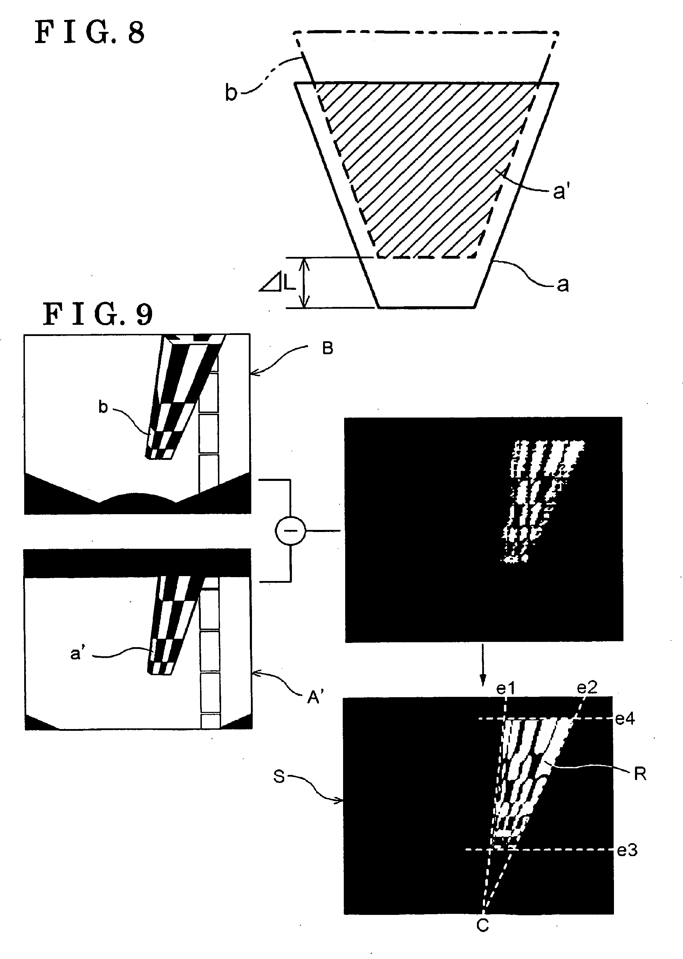

Fig. 8 is an explanation drawing for indicating a principle of an extraction of the three dimensional object. The three dimensional object is illustrated in an approximately trapezoidal shape for convenience. An approximately trapezoidal shape "a" (simply referred to as a trapezoidal shape "a") in Fig. 8 indicates the three-dimensional object 40 in the GPT image A transformed from the captured image IA that is one of the two captured images I (two parallax images). In this example, because a single camera is moved and used at different positions for capturing two parallax images, the trapezoidal shape "a" indicates the three-dimensional object 40 seen in a hypothetical viewpoint before the camera 12 is moved. The hypothetical viewpoint of the trapezoidal shape "a" is a viewpoint from which the image is taken by the camera 12 that is positioned at the hypothetical camera 12A indicated in Fig. 3. The captured image IA referred in this example corresponds to a first image in the embodiment, and the GPT image A referred in this example corresponds to a first transformed image in the embodiment.

An approximately trapezoidal shape "b" (simply referred to as a trapezoidal shape "b") in Fig. 8 indicates the three-dimensional object 40 in a GPT image B transformed from the captured image IB that is the other of the two captured images I (two parallax images). The trapezoidal shape "b" indicates the three-dimensional object 40 seen in a hypothetical viewpoint after the camera 12 is moved by a distance ΔL. Because the trapezoidal shape "b" indicates the three dimensional object captured at a position closer thereto, a width of the trapezoidal shape "b" is supposed to be slightly larger than that of the trapezoidal shape "a" in an actual image, however in Fig. 8, the trapezoidal shapes "a" and "b" are shown in the same size for convenience. A trapezoidal shape "a' " emphasized by a hatching portion in Fig. 8 indicates a three-dimensional object obtained on the basis of a prediction in which the GPT image A, seen from the hypothetical viewpoint before the camera 12 is moved, is moved by the distance ΔL, in other words the three-dimensional object 40 is seen from a hypothetical viewpoint after the camera 12 is moved. The captured image IB referred in this example corresponds to a second image in the embodiment, and the GPT image B referred in this example corresponds to a second transformed image in the embodiment. The GPT image including the trapezoidal shape "a' " corresponds to a position corrected image (e.g., first corrected image). Differences between the trapezoidal shape "b" and the trapezoidal shape "a' " are calculated, and image elements having the differences are considered so as to correspond a position where the three-dimensional object 40 exits. Thus, an area where the three-dimensional object 40 exists is extracted.

Fig. 9 shows explanation diagrams indicating an example for extracting a range (three-dimensional object range R), in which the three-dimensional object 40 exists, from the GPT image obtained from the captured image I illustrated in Fig. 6. As described above in accordance with Fig. 8, a differential image S is obtained by taking the differences between the GPT image A' (position corrected image) that is obtained by applying the positional correction of the distance ΔL to the GTP image A captured before the camera 12 is moved and the GPT image B that is captured after the camera 12 is moved by distance ΔL. After extracting edges from the differential image S, as illustrated in a last drawing in Fig. 9, a trapezoidal shape formed with sides e1, e2, e3 and e4 is extracted as the three-dimensional object range R.

The sides e3 and e4 correspond to upper and lower bases of the trapezoidal shape. The sides e1 and e2 correspond to two sides other than the upper and lower bases, in other words the sides e1 and e2 correspond to leg portions of the trapezoidal shape. The sides e1 and e2 are crossed at the optical center C(principal point), in other words the three-dimensional object range R is extracted as the trapezoidal shape in which the two unparalleled sides e1 and e2 are crossed at the optical center C when seen in an approximately vertical direction. Because the three-dimensional object 40 is a rectangular solid in the above example, the three-dimensional object range R is approximately identical to the three-dimensional object 40, however, even when the three-dimensional object 40 is formed in another shape, a three-dimensional object range R in a trapezoidal shape may be extracted.

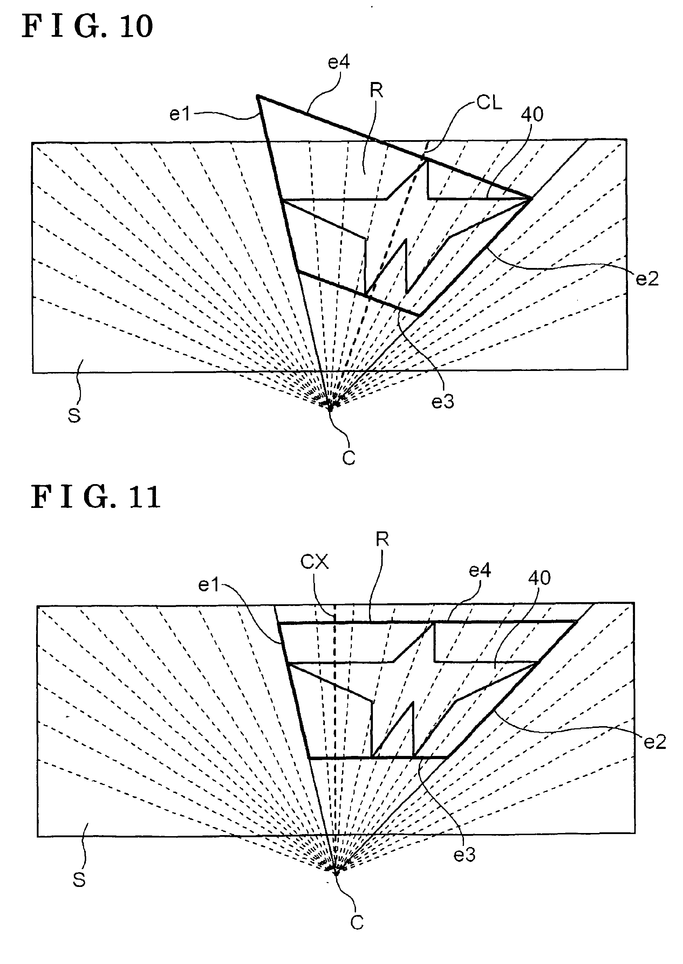

Fig. 10 is an explanation diagram indicating another example of the extraction of the three-dimensional object range R. In this example, a star-shaped object is captured as the three-dimensional object range R in order to simplify the understanding. Dotted lines are radially extended from an optical center C, and a dotted line that passes a right end of image elements, detected as the three-dimensional object 40 by taking the differential, is indicated as a side e2, and a dotted line that passes a left end of the image elements is indicated as a side e1, and the sides e1 and e2 are located so as to be unparallel to each other. A line passing the image elements detected as the three-dimensional object 40 at a point that is closest to the vehicle 30 and orthogonally crossing a central line CL is a side 3 (upper base). The central line CL is one of the lines radially extending from the optical center C and existing between the two sides e1 and e2 so as to equally divide an angle formed between the sides e1 and e2. A line passing the image elements detected as the three-dimensional object 40 at a point that is the farthest from the vehicle 30, and orthogonally crossing the central line CL, or located so as to be parallel to the side e3, is a side 4 (lower base). The two sides e3 and e4 are located so as to be parallel to each other in the three-dimensional object range R.

Fig. 11 is an explanation diagram indicating another example of the extraction of the three-dimensional object range R. In this example, because two sides e1 and e2 that are unparallel to each other are set in the same manner as is explained in the above example shown in Fig. 10, therefore detailed explanations are omitted. A line passing the image elements detected as the three-dimensional object 40 at a point that is closest to the vehicle 30 and orthogonally crossing an optical axis CX is a side 3 (upper base). A line passing the image elements detected as the three-dimensional object 40 at a point that is the farthest from the vehicle 30, and orthogonally crossing the optical axis CX, or located so as to be parallel to the side e3, is a side 4 (lower base). The two sides e3 and e4 are located so as to be parallel to each other in the three-dimensional object range R. Accordingly, a three-dimensional object range R formed in a trapezoidal shape of the three-dimensional object 40 in various shapes may appropriately be extracted. In other words, the three-dimensional object range R may be extracted with high repeatability regardless of the shape of the three-dimensional object.

The distance ΔL described above may be an actual moving distance (an actual moving amount) of the vehicle 30, and may also be a predetermined moving distance (a predetermined moving amount) that is set before the vehicle 30 is moved. Accordingly, the position corrected image may be an image where the first transformed image is positionaly corrected on the basis of the actual moving amount ΔL, and the position corrected image may also be an image where the first transformed image is positionaly corrected on the basis of the predetermined moving amount that is previously assumed.

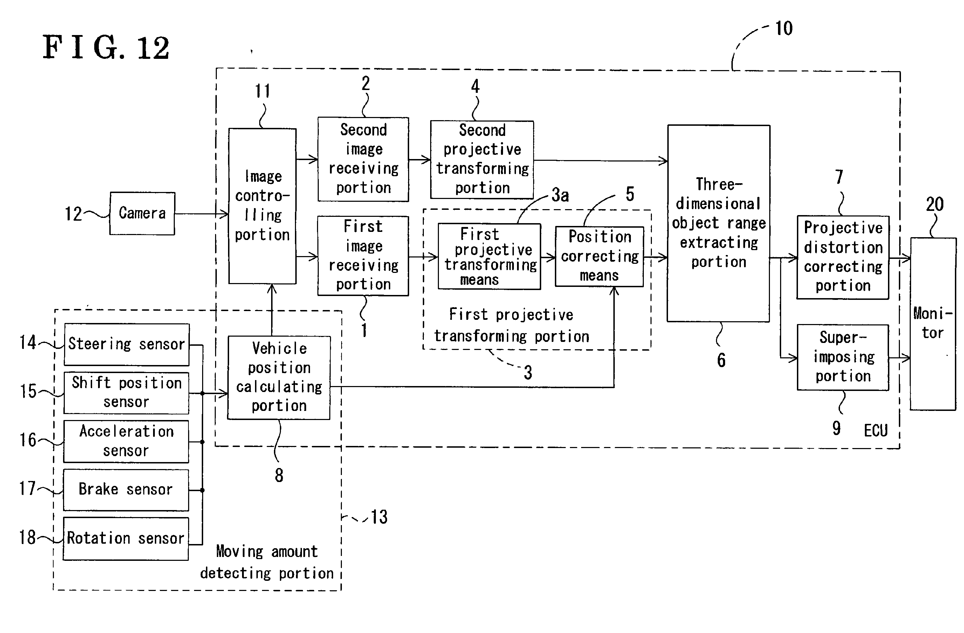

Fig. 12 illustrates a block diagram schematically indicating a configuration of the bird's-eye image generating apparatus related to this disclosure. The bird's-eye image generating apparatus includes the ECU10 as a core member. As illustrated in the block diagram of Fig. 12, the bird's-eye image generating apparatus (ECU10) includes functional portions such as a first image receiving portion 1, a second image receiving portion 2, a first projective transforming portion 3, a second projective transforming portion 4, a three-dimensional object range extracting portion 6, a projective distortion correcting portion 7, a vehicle position calculating portion 8, a superimposing portion 9 and an image controlling portion 11. The ECU 10 is configured of a microcomputer and the like, and each functional portion of the ECU 10 may execute its function on the basis of a program or the like. Accordingly, each functional portion may not be physically independently provided and may be provided as a single component such as an identical hardware for executing each functional portion in cooperation with a software such as a program or the like.

The first image receiving portion 1 is a functional portion for receiving a captured image I taken at a first position by means of the camera 12 that is mounted to the vehicle 30 in order to capture a surrounding view thereof. The captured image I captured by the camera 12 at the first position is used as a first image IA. The second image receiving portion 2 is a functional portion for receiving the captured image I taken at a second position by means of the camera 12. The second position is set where the vehicle 30 moves by a moving distance (a moving amount ΔL) from the first position, at which the first image IA is captured. The captured image I captured by the camera 12 at the second position is used as a second image IB. The image controlling portion 11 is a functional portion for controlling a timing at which each of the first image receiving portion 1 and the second image receiving portion 2 receives the captured image I.

The first projective transforming portion 3 includes two functional portions, a first projective transforming means 3a and a position correcting means 5. The first projective transforming means 3a is a functional portion for executing a projective transformation to the first image IA so as to be a first transformed image A, which is seen from a second viewpoint in an approximately vertical direction.
The position correcting means 5 is a functional portion for correcting the first transformed image A so as to be a position corrected image A' at the second position. For example, the projective transforming portion 3 corrects the first transformed image A so as to be the position corrected image A' on the basis of the detection result of the vehicle position calculating portion 8 (moving amount detecting portion) detecting a moving distance of the vehicle. In other words, the first transformed image A is corrected so as to be the position corrected image A' on the basis of the actual moving amount ΔL detected and calculated by means of the vehicle position calculating portion 8.

As another example, the first projective transforming portion 3 may correct the first transformed image A so as to be the position corrected image A' at the second position being set so as to be a position where the vehicle 30 is distant from the first position by a predetermined distance in a predetermined direction. The predetermined distance between the first position and the second position corresponds to a moving amount ΔL. In this case, the second image receiving portion 2 may receive a second image IB when the vehicle position calculating portion 8 (moving amount detecting portion) detects that the vehicle 30 moves by the moving amount ΔL. Specifically, the second image receiving portion 2 receives the captured image I captured by the camera 12 when the vehicle 30 reaches the second position on the basis of the detection result of the vehicle position calculating portion 8 (moving amount detecting portion). The second position in this case may not accurately correspond to the second position that is seen in order to generate the position corrected image A'. In other words, the second image receiving portion 2 may receive the captured image I, which is captured at a time when the vehicle 30 reaches in the vicinity of the second position, as the second image IB. A range that corresponds to the vicinity of the second position may be set in advance. A timing when the second image receiving portion 2 receive the second image IB is controlled by means of the image controlling portion 11.

The vehicle position calculating portion 8 is a functional portion for calculating a moving amount and a position of the vehicle on the basis of the detection result of sensors such as the steering sensor 14, the shift position sensor 15, the accelerator sensor 16, the brake sensor 17 and the rotation sensor 18. The sensors 14 through 18 and the vehicle position calculating portion 8 correspond to the moving amount detecting portion 13. The vehicle position calculating portion 8 may be provided at another ECU or at a controlling device, and the calculated result may be inputted to the ECU 10.

The first projective transforming means 3a and the position correcting means 5 may be provided independently from each other. A functional portion corresponding to the projective transforming means 3a may be provided as the first projective transforming portion 3, and another functional portion corresponding to the position correcting means 5 may be provided as the position correcting portion. The projective transformation and the position correction may be executed at the same time by a single calculation by means of a single functional portion (e.g., the first projective transforming portion 3).

The second projective transforming portion 4 is a functional portion for executing a projective transformation by which the second image IB is transformed into the second transformed image B seen in the second view. The three-dimensional object range extracting portion 6 is a functional portion for extracting the three-dimensional object range R in which the three-dimensional object 40 exists, on the basis of a difference between the position corrected image A' and the second transformed image B. The three-dimensional object range R is extracted so as to be in a trapezoidal shape in which two sides (sides e1 and e2), which are not formed in parallel, are positioned so as to cross at an optical center C,

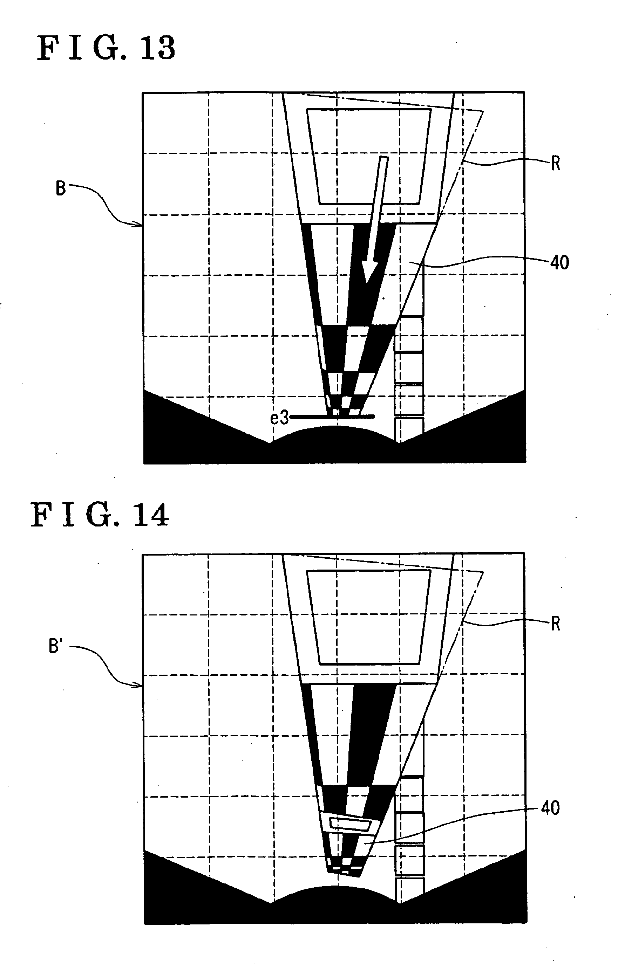

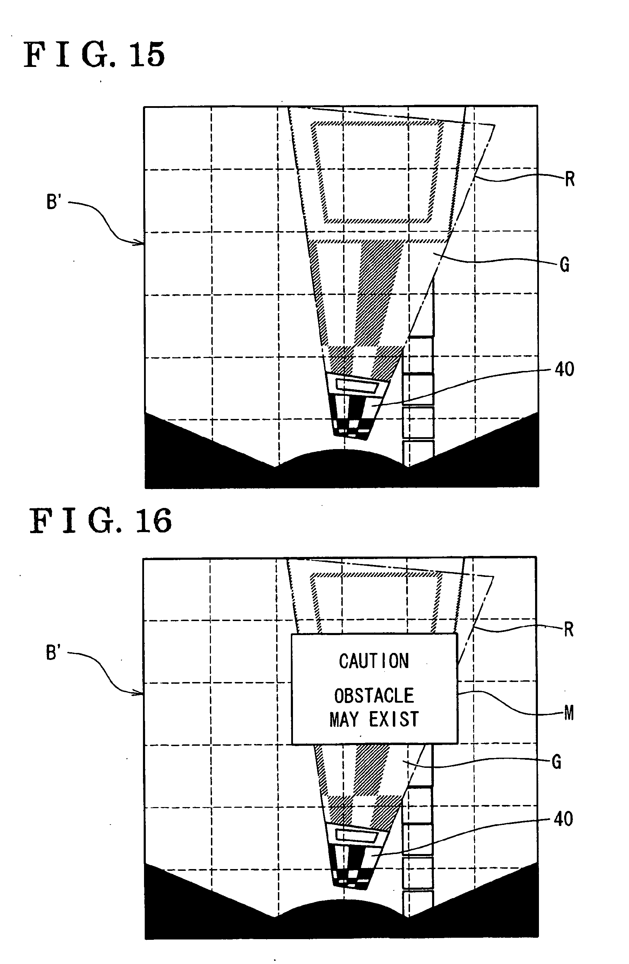

The projective distortion correcting portion 7 is a functional portion for correcting the image of the three-dimensional object range R in the second transformed image B so as to be a projective distortion corrected image (a second corrected image, an image indicated by a numeral B' in Fig. 14). Specifically, the three-dimensional object range R in the second transformed image B is compressed toward the optical center C at the time when seen from above in an approximately vertical direction. The superimposing portion 9 is a functional portion for applying a masking process to a range other than the range in which the compressed image of the three-dimensional object 40 exists in the second transformed image B and for superimposing a warning (indicated by a numeral M in Fig. 16) on the image in order to alarming an existence of the three-dimensional object 40. Functions of the projective distortion correcting portion 7 and the superimposing portion 9 will be described in detail below.

The projective distortion and the correcting method thereof will be explained. Fig. 13 illustrates an explanation diagram indicating a principle of the correction of the projective distortion. Fig. 14 is an example of an image of a projective distortion corrected image B' in which the projective distortion is corrected. Fig. 15 is an example of an image in which a masking process is applied to the projective distortion corrected image B'. Fig. 16 is an example of an image in which the warning M is superimposed on the projective distortion corrected image B'.

As illustrated in Fig. 7, the three-dimensional object 40 has a large distortion in the GPT image B in which a viewpoint conversion is applied. In order to improve a visibility of the image, the projective distortion correcting portion 7 corrects the image of the three-dimensional object range R in the GPT image B (second transformed image) so as to be compressed toward the optical center C to be the projective distortion corrected image B' illustrated in Fig. 14. Specifically, the three-dimensional object 40 is compressed toward the optical center C (compressed downwardly) relative to the side e3 positioned closer to the optical center C, in other words the three-dimensional object 40 is compressed relative to a lower end position at which the three-dimensional object 40 contacts the ground. The image is compressed on the basis of a proportional distribution, however, another compressing method may be used. After the image is compressed as described above, a level of distortion (e.g., unrealistic perspective) of the three-dimensional object 40 may be decreased as illustrated in Fig. 14.

However, in a range G corresponding to a range in which the compressed image of the three-dimensional object 40 does not exist in the three-dimensional object range R, an original image having distortions still exists. When the original image having distortions exist, the effect caused by decreasing the level of distortion (e.g., unrealistic perspective) of the three-dimensional object 40 may be limited. Accordingly, the range G may be masked with a color that is identical to a background color in the vicinity of the three-dimensional object range R. Because the range G to be masked is located behind the three-dimensional object 40, the range G is not included in the captured image I captured by the camera 12. Further, the three-dimensional object 40 is located closer to the vehicle 30 rather than the range G (e.g., a blind area), masking the blind area may cause serious problem.

Alternatively, as illustrated in Fig. 15, the range G may be masked by a half tone process so that the range G may not be highly distinguishable. For example, the range G may be masked by the half tone process with warm colors so that a range of the blind area that is hidden behind the three-dimensional object 40 may be distinguished in order to draw attention. The user may be passively informed by the color that the range G is the blind area. Generally the color of the road surface is a monotone color or a cold color, therefore the range G masked with the warm color may have an increased visibility. Further, applying the half tone process to the range G, the user may know that the range G is a blind area without largely distinguishing the difference between the range G and the background.

Further, the existence of the three-dimensional object 40 may be informed to the user in a positive manner. As indicated in a drawing of Fig. 16, a warning M (a notice) may be superposed on the image so as to overlap onto the range G. By displaying the warning M so as to overlap onto the range G, the image including the distortion remaining in the projective distortion corrected image B' may not draw an attention of the user, and the level of distortion (e.g., unrealistic perspective) may be decreased. Because the range G including an image having the distortion is a blind area that is hidden behind the three-dimensional object 40, the range G may not be included in the captured image I captured by the camera 12, and it may not be forcedly displayed. Accordingly, the warning M (notice) is superimposed on the range G, which is a blind area, and that means the warning M is not superimposed on a range that is considered as important information to the user. The warning M being superimposed on a range other than the range G may cover an object on the ground other than the three-dimensional object 40 such as a road indication. According to the embodiment, because the warning M is superimposed on the range G, the user may recognize both of the bird's-eye image and the warning M with high visibility. The above-mentioned processes for masking, the half tone process and the superimposing of the warning M may be executed by the superimposing portion 9.

According to the embodiment, the bird's-eye image generating apparatus for generating the bird's-eye image by converting the image captured by the camera, mounted to the vehicle so as to capture the surrounding of the vehicle, into the image seen in a viewpoint in an approximately vertical direction, so that the user may recognize a distance between the vehicle and the three-dimensional object without any unreasonable feeling. A parking assist device, a driving assist device and the like with high convenience may be provided using the bird's-eye image generating apparatus.

A bird's-eye image generating apparatus includes a first image receiving portion for receiving a first captured image as a first image taken by a camera at a first position, the camera mounted to a vehicle in order to capture a vehicle periphery, a second image receiving portion for receiving a second captured image as a second image taken by the camera at a second position where the vehicle is moved from the first position by a moving amount, a first projective transforming portion for executing a projective transformation to the first image so as to be a first transformed image that is an image seen from above in a vertical direction and for correcting the first transformed image so as to be a first corrected image at the second position, a second projective transforming portion for executing the projective transformation to the second image so as to be in a second transformed image that is an image seen from above in the vertical direction, a three-dimensional object range extracting portion for extracting a three-dimensional object range in which a three-dimensional object exists, on the basis of a difference between the first corrected image and the second transformed image, so as to be in a trapezoidal shape in which two unparallel sides are positioned so as to be crossed.at an optical center when seen from above in the vertical direction and a projective distortion correcting portion for correcting an image corresponding to the three-dimensional object range by compressing toward the optical center so as to be a second corrected image.

Thus, the bird's-eye image whose viewpoint is converted is generated by applying the projective transformation to the entire range of the captured image, and the three-dimensional object range in which the three-dimensional object exists is extracted from the generated bird's-eye image. Because the three-dimensional object range is extracted so as to be in a trapezoidal shape having two parallel side and two unparallel sides that are crossed at the optical center when seen from above in an approximately vertical direction, the three-dimensional object range may be extracted with high repeatability regardless of the shape of the three-dimensional object. Further, because the three-dimensional object is compressed within the three-dimensional object range toward the optical center, the distortion in the image may visually appropriately corrected on the basis of a simple process such as a proportional distribution or the like. The three-dimensional object is generated as an image seen from above in an approximately vertical direction, a level of an unreasonable perception to the entire bird's-eye image may be decreased. Accordingly, the image captured by the camera, mounted to the vehicle in order to capture the vehicle periphery, may be processed by the viewpoint conversion so as to be the bird's-eye image seen from above in an approximately vertical direction, and the bird's-eye image is displayed together with the three-dimensional object, without providing the unreasonable perception, in order to provided an easy-to-understand distance perspective between the three-dimensional object and the vehicle to the user.

The bird's-eye image generating apparatus further includes a superimposing portion for masking a range in which a compressed image of the three-dimensional object does not exist in the three-dimensional object range with a color that is identical to a background color in the vicinity of the three-dimensional object range.

In a range corresponding to a range in which the compressed image of the three-dimensional object does not exist in the three-dimensional object range, the original image having distortions still exist. When the original image having distortions exist, the effect caused by decreasing the level of strangeness (e.g., unreasonable perception) of the three-dimensional object may be limited. Accordingly, the range where the three-dimensional object does not exist may be masked with a color that is identical to a background color in the vicinity of the three-dimensional object range. Because the range to be masked is located behind the three-dimensional object, the range is not included in the captured image I captured by the camera. Further, the three-dimensional object is located closer to the vehicle rather than the range (e.g., a blind area), masking the blind area may cause a serious problem.

The bird's-eye image generating apparatus further includes a superimposing portion for masking a range in which a compressed image of the three-dimensional object does not exist in the three-dimensional object range by applying a half tone process with warm color.

In the range corresponding to the range in which the compressed image of the three-dimensional object does not exists in the three-dimensional object range, the original image having distortions still exist. However, when the range corresponding to the range in which the compressed image of the three-dimensional object does not exists in the three-dimensional object range, the original image having distortions still exist is masked by applying the half tone process with warm color, the unreasonable perception may be decreased. The range to be masked is the blind area that is hidden behind the three-dimensional object, and the range of the blind area that is hidden behind the three-dimensional object may be distinguished in order to draw an attention. The user may be calmly informed with the color that the range is the blind area in a negative manner. Generally the color of the road surface is a monotone color or a cold color, so that the range masked with the warm color may increase a visibility. Further, applying the half tone process to the range G, the user may know that the range is a blind area without largely distinguishing the difference between the range and the background.

The bird's-eye image generating apparatus further includes a superimposing portion for superimposing a warning on a range in which a compressed image of the three-dimensional object does not exist in the three-dimensional object range in order to informing an existence of the three-dimensional object to a user.

In the range corresponding to the range in which the compressed image of the three-dimensional object does not exists in the three-dimensional object range, the original image having distortions still exist. Because the range including the image having the distortion is the blind area that is hidden behind the three-dimensional object, the range may not be included in the captured image captured by the camera, and it may not be forcedly displayed. Accordingly, the warning (notice) is superimposed on the range, which is a blind area, and that means the warning is not superimposed on a range that is considered as important information to the user. The warning being superimposed on a range other than the range may cover another object on the ground other than the three-dimensional object such as a road indication. According to the embodiment, because the warning is superimposed on the range, the user may recognize both of the bird's-eye image and the warning with high visibility.

According to the bird's-eye image generating apparatus, the first projective transforming portion corrects the first transformed image to the first corrected image at the second position on the basis of a detection at a moving amount detecting portion for detecting a moving amount of the vehicle.

In this configuration, because the first transformed image is precisely positionaly corrected relative to the second position at which the second image is captured, the three-dimensional object range is extracted with high accuracy.

According to the bird's-eye image generating apparatus, the first projective transforming portion corrects the first transformed image to a first corrected image at the second position where the vehicle is distant from the first position in a predetermined direction by a predetermined distance, and the second image receiving portion receives the captured image, taken at a position where the vehicle reaches the second position, as the second image, on the basis of a detection at a moving amount detecting portion for detecting a moving amount of the vehicle.

In this configuration, before the second image is captured, the first transformed image is positionaly corrected, and the differences between the second transformed image and the position corrected image may be quickly calculated.

Accordingly, the bird's-eye image may be generated with providing a small time-lag and displayed n the monitor. In this case, the first transformed image needs to be positionaly corrected on the basis of the assumption of the second position. The moving amount from the first position to the second position is a slight amount, which may be considered as a straight-line movement. Thus, the second position may be predicted with high accuracy in accordance with the vehicle speed and the steering angle (the operation amount of the steering wheel).

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A bird's-eye image generating apparatus comprising:
a first image receiving portion (1) for receiving a first captured image as a first image (IA) taken by a camera (12) at a first position, the camera mounted to a vehicle (30) in order to capture a vehicle periphery;
a second image receiving portion (2) for receiving a second captured image as a second image (IB) taken by the camera (12) at a second position where the vehicle (30) is moved from the first position by a moving amount;
a first projective transforming portion (3) for executing a projective transformation to the first image (IA) so as to be a first transformed image (A) that is an image seen from above in a vertical direction and for correcting the first transformed image so as to be a first corrected image (A') at the second position;
a second projective transforming portion (4) for executing the projective transformation to the second image (IB) so as to be in a second transformed image (B) that is an image seen from above in the vertical direction;
a three-dimensional object range extracting portion (6) for extracting a three-dimensional object range (R) in which a three-dimensional object (40) exists, on the basis of a difference between the first corrected image (A') and the second transformed image (B), so as to be in a trapezoidal shape in which two unparallel sides (e1, e2) are positioned so as to be crossed at an optical center (C) when seen from above in the vertical direction; and
a projective distortion correcting portion (7) for correcting an image corresponding to the three-dimensional object range (R) by compressing toward the optical center (c) so as to be a second corrected image (B').

2. The bird's-eye image generating apparatus according to Claim 1 further including a superimposing portion (9) for masking a range in which a compressed image of the three-dimensional object does not exist in the three-dimensional object range with a color that is identical to a background color in the vicinity of the three-dimensional object range.

3. The bird's-eye image generating apparatus according to Claim 1 further including a superimposing portion (9) for masking a range in which a compressed image of the three-dimensional object does not exist in the three-dimensional object range by applying a half tone process with warm color.

4. The bird's-eye image generating apparatus according to Claim 1 further including a superimposing portion (9) for superimposing a warning on a range in which a compressed image of the three-dimensional object does not exist in the three-dimensional object range in order to informing an existence of the three-dimensional object to a user.

5. The bird's-eye image generating apparatus according to any one of Claims 1 to 4, wherein the first projective transforming portion (3) corrects the first transformed image (A) to the first corrected image (A') at the second position on the basis of a detection at a moving amount detecting portion (13) for detecting a moving amount of the vehicle.

6. The bird's-eye image generating apparatus according to any one of Claims 1 to 4, wherein the first projective transforming portion (3) corrects the first transformed image (A) to a first corrected image (A') at the second position where the vehicle is distant from the first position in a predetermined direction by a predetermined distance, and the second image receiving portion (2) receives the captured image, taken at a position where the vehicle reaches the second position, as the second image (IB), on the basis of a detection at a moving amount detecting portion (13) for detecting a moving amount of the vehicle.
